# EUROPEAN PATENT APPLICATION

(11) **EP 1 870 848 A1**
(43) Date of publication of application: **26.12.2007**
(21) Application number: 07252348.3
(22) Date of filing: 11.06.2007
(51) Int. Cl.: G06Q 10/00

(54) **Method and device for preparing parts catalogue**

(30) Priority: 19.06.2006 JP 2006168381
(71) Applicant: Ricoh Company, Ltd., Tokyo 143-8555 (JP)
(72) Inventor: Kagawa, Masaaki, Tokyo 143-8555 (JP); Satoh, Naoyuki, Tokyo 143-8555 (JP)
(74) Representative: Leeming, John Gerard

(57) **Abstract**

A method of preparing a parts catalogue converts a first parts catalogue data including an exploded view of a product and a parts table of parts in the exploded view into a second parts catalogue data including part numbers and part names of the parts in the exploded view. The parts catalogue preparation method includes a reading step and three extracting steps. The reading step reads the first parts catalogue data. The first extracting step extracts the exploded view and the parts table from the first parts catalogue data. The second extracting step extracts part information of each part in the parts table. The third extracting step extracts region information of each part. The region information includes information on a minimum region enclosing one of the parts in the exploded view and information on a position of a number connected with one of the parts by a lead line.

## Description

The present invention relates to a method and device for preparing a parts catalogue, and more particularly to a method and a device capable of converting a first parts catalogue data into a second parts catalogue data.

Documents such as procedure manuals, instruction manuals, parts catalogues and parts lists generally include illustrations, for example, exploded perspective views. Such illustrations are often prepared by using 3D-CAD data to save labour.

Such parts catalogue and parts lists are used, for example, when ordering a replacement part in a maintenance service. The parts catalogue and the parts list include a drawing illustrating the shape and assemble position of the replacement part together with a part name and a part number thereof. In general, in such a parts catalogue, each part is shown as a portion of a unit that includes a plurality of parts.

A related art parts catalogue includes an exploded view so that the assemble position of a part is illustrated while the shape of the part is also recognized. In addition, each part in the exploded view has a number which is connected with the part by a lead line, and the number is linked with the parts number in a table. In this way, a parts catalogue user can correlate the number in the exploded view with the number in the table to identify a particular part.

The present invention aims to address technical problems relating to the storage and display on a display device of limited size and/or resolution of complex three dimensional information and related alphanumeric data whilst maintaining comprehensibility by the user.

According to an aspect of the invention, a method of preparing a parts catalogue converts a first parts catalogue data including an exploded view of a product and a parts table of parts in the exploded view into a second parts catalogue data including part numbers and part names of the parts in the exploded view. The parts catalogue preparation method includes reading, first extracting, second extracting and third extracting. The reading step reads the first parts catalogue data. The first extracting step extracts each of the exploded view and the parts table from the first parts catalogue data. The second extracting step extracts part information of each of the parts in the parts table. The third extracting step extracts region information of each of the parts. The region information includes at least one of information on a minimum region enclosing one of the parts in the exploded view and information on a position of a reference number connected with the one of the parts by a lead line.

According to another aspect of the invention, a parts catalogue preparation device converts a first parts catalogue data including an exploded view of a product and a parts table of parts in the exploded view into a second parts catalogue data including part numbers and part names of the parts in the exploded view. The parts catalogue preparation device includes a first, a second and a third extraction mechanisms. The first extraction mechanism reads the first parts catalogue data and extracts each of the exploded view and the parts table from the first parts catalogue data. The second extraction mechanism extracts part information of each of the parts in the extracted parts table. The third extraction mechanism extracts region information of each of the parts. The region information includes at least one of information on a minimum region enclosing on of the parts in the exploded view and a position of a reference number connected to the one of the parts by a lead line.

A more complete appreciation of exemplary embodiments of the invention and many of the attendant advantage thereof will be readily obtained as the same becomes better understood by reference to the following detailed description when considered in connection with the accompanying drawings, wherein:
FIG. 1 is a block diagram illustrating a data processor for parts catalogue preparation according to an exemplary embodiment of the present invention;
FIG. 2 is a schematic diagram illustrating an example of catalogue data stored in a parts catalogue database;
FIG. 3A and 3B are schematic diagrams respectively illustrating an example of unit display and an example of single part display;
FIG. 4A and 4B are schematic diagrams illustrating an example of part assembly from different angles;
FIG. 5A and 5B are schematic diagram illustrating an examples of the part assembly from different angles;
FIG. 6 is a schematic diagram illustrating an example of boundary information;
FIG. 7 is a schematic diagram illustrating an example display screen image of a second parts catalogue;
FIG. 8 is a schematic diagram illustrating an example display screen image of a first parts catalogue;
FIG. 9 is a schematic diagram illustrating an example display screen image of the second parts catalogue prepared from the first parts catalogue;
FIG. 10 is a block diagram illustrating an example processing system for preparing a second parts catalogue from a first parts catalogue; and
FIG. 11 is a flowchart illustrating an example procedure for preparing a second parts catalogue from a first parts catalogue.

In describing exemplary embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner.

Referring now to the drawings, wherein like reference numerals designate identical or corresponding parts throughout the several views, a method and a device for parts catalogue preparation according to an exemplary embodiment of the present invention is described.

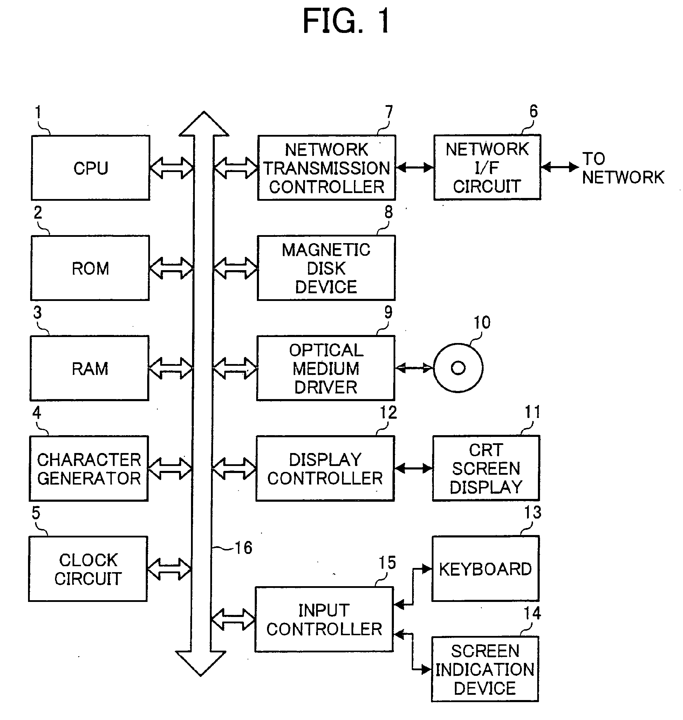

Referring to FIG. 1, a data processor used for a parts catalogue preparation in an exemplary embodiment of the present invention is illustrated.

The data processor includes a central processing unit (CPU) 1, a read only memory (ROM) 2, a random access memory (RAM) 3, a character generator 4, a clock circuit 5, a network interface circuit 6, a network transmission controller 7, a magnetic disk device 8, an optical medium driver 9, an optical recording medium 10, a CRT screen display device 11, a display controller 12, a keyboard 13, a screen indication device 14, an input controller 15, and an internal bus 16.

The CPU 1 controls an operation of the data processor. The ROM 2 stores a program, data and the like that are executed by the CPU 1. The RAM 3 includes, for example, a work area of the CPU 1.

The character generator 4 generates display data of a graphic character. The clock circuit 5 outputs current date and time information. The network interface circuit 6 connects the data processor to a network (not shown) such as local area networks. The network transmission controller 7 executes a communication control process of a protocol suite to exchange various data between the data processor and another data terminal device through the network.

The magnetic disk device 8 stores, for example, data files such as application programs, work-data and file-data. The optical medium driver 9 accesses data of the optical recording medium 10. The optical recording medium 10 is a replaceable optical recording medium such as a CD-ROM and a DVD. The CRT screen display device 11 displays a screen used to operate the data processor. The display controller 12 controls a display content of the CRT display screen 11.

The keyboard 13 is used for a key operation for the data processor. The screen indication device 14, for example, directs an optional point of the CRT screen display device 11. The input controller 15, for example, captures input information of the keyboard 13 and the screen indication device 14.

The CPU 1, ROM 2, RAM 3, character generator 4, clock circuit 5, network transmission controller 7, magnetic disk device 8, optical medium driver 9, display controller 12, and input controller 15 are connected to the internal bus 16 through which the data can be exchanged among each of these elements.

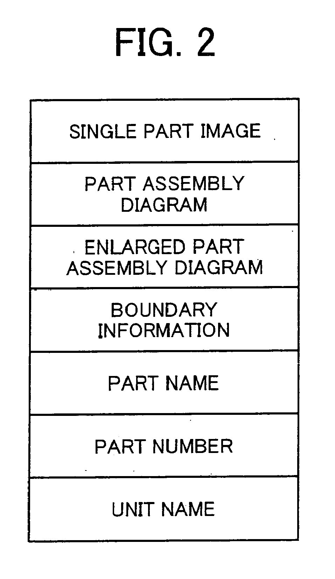

According to the exemplary embodiment, the magnetic disk device 8 stores a parts catalogue database of a product so that a user can obtain information on a replacement part information of the product such as a part number. The parts catalogue database includes catalogue data that is formed for each of the parts. An example of the catalogue data is shown in FIG. 2.

FIG. 2 illustrates an example of the catalogue data including a single part image, a part assembly diagram, an enlarged part assembly diagram, boundary information, a part name, a part number and a unit name.

The single part image is an image of a single part. Each of the parts is imaged in a different scale at which the single part as a whole is illustrated as large as possible.

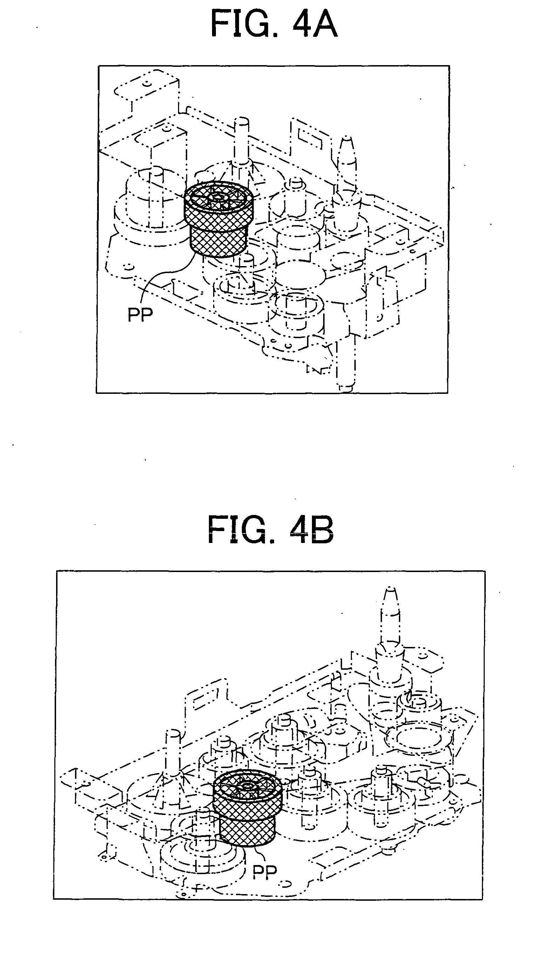

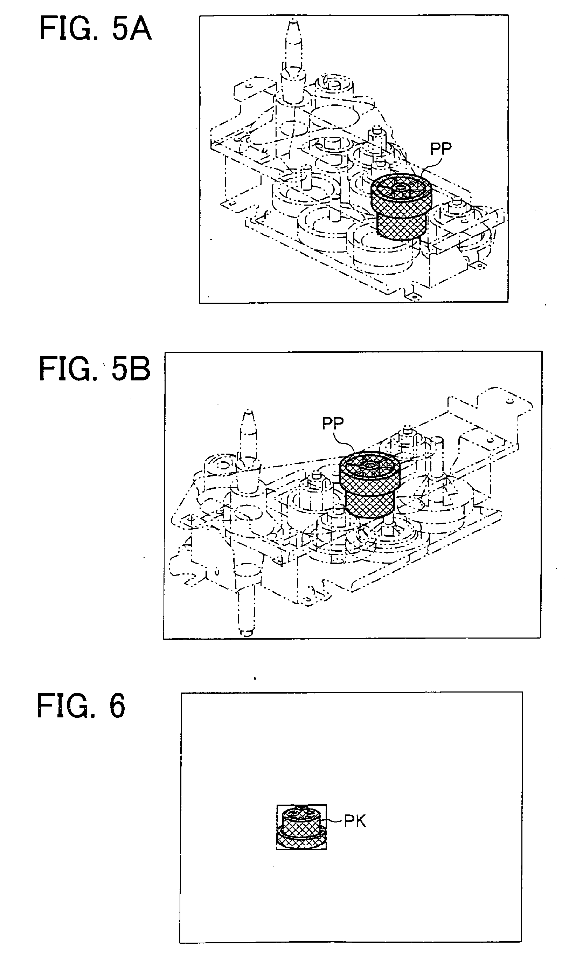

The part assembly diagram is an image that is formed for each part. The part assembly diagram includes an image of a unit having a plurality of parts. For example, one part of the unit is emphasized while another part of the unit is not emphasized. Examples of the part assembly diagram will be described with reference to FIG. 4A, FIG. 4B, FIG. 5A and FIG. 5B. A plurality of part assembly diagrams from different angles can be formed as necessary. The part assembly diagrams from substantially the same angle can be illustrated at substantially the same scale and as large as possible to show the unit as a whole.

The enlarged part assembly diagram is an enlarged view of the part assembly diagram. The enlarged part assembly diagram is illustrated at a maximum scale at which the part as a whole is illustrated as large as possible. The enlarged part assembly diagram is also illustrated at a minimum scale at which the unit as a whole is illustrated as large as possible. A plurality of enlarged part assembly diagrams of different scales can be formed as necessary, and the part as a whole can be shown regardless of the scale size.

The boundary information indicates a position of the part in the part assembly diagram and the enlarged part assembly diagram by a combination of X and Y coordinates.
For example, an image of a part includes an origin (X=0, Y=0) at an upper left corner, where the X coordinate increases in a positive value in a right direction and the Y coordinate increases in a positive value in a down direction. The combination of the X and Y coordinates can form a rectangular in which the part fits.

The part name is a name of the part.

The part number is a number provided to every part, and can be referred to as an order number. A plurality of parts having substantially the same shape can be provided with the same part number.

The unit name is a name of the unit having a plurality of parts. Each part generally belongs to one of the units, for example, a sheet feeding unit and a sheet ejection unit.

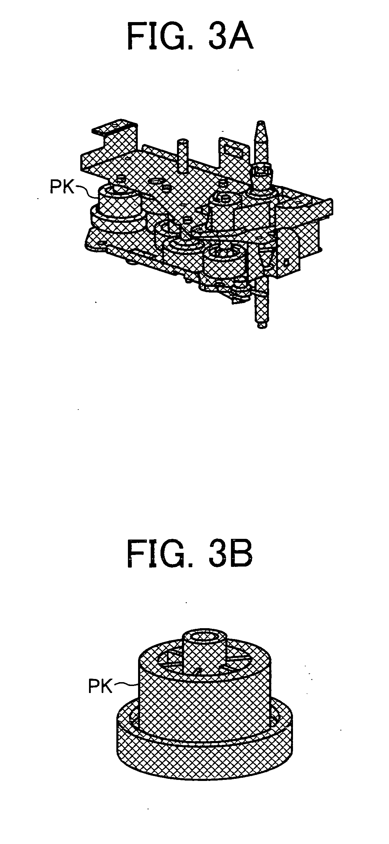

Referring to FIG. 3A, the unit including a part PK stored in the parts catalogue database is illustrated as an example of unit display. The part PK is also illustrated independently in FIG. 3B as an example of single part display.

Referring to FIG. 4A, the unit including a part PP stored in the parts catalogue database is illustrated from a first angle as an example of the part assembly diagram. The part PP is assembled into the unit as shown in FIG. 4A. The part PP, for example, can be shaded and wireframed in red so as to be emphasized while another part of the unit can be illustrated in a translucent image in the part assembly diagram. Thereby, an assemble position of the part PP can be emphasized in such manner. FIG. 4B is another example of the part assembly diagram when the part PP is illustrated from a second angle.

Referring to FIG. 5A and FIG. 5B, the part PP is illustrated from a third angle and a forth angle respectively as examples of the part assembly diagram.

Therefore, the part PP in the exemplary embodiment is illustrated from four different angles as shown in FIG. 4A, FIG. 4B, FIG. 5A and FIG. 5B. Such plurality of part assembly diagrams from different angles are formed beforehand so that a time necessary for browsing the part can be reduced.

FIG. 6 illustrates an example of the boundary information with a part PK. The boundary information, for example, forms the rectangular to enclose the part PK of the single part.

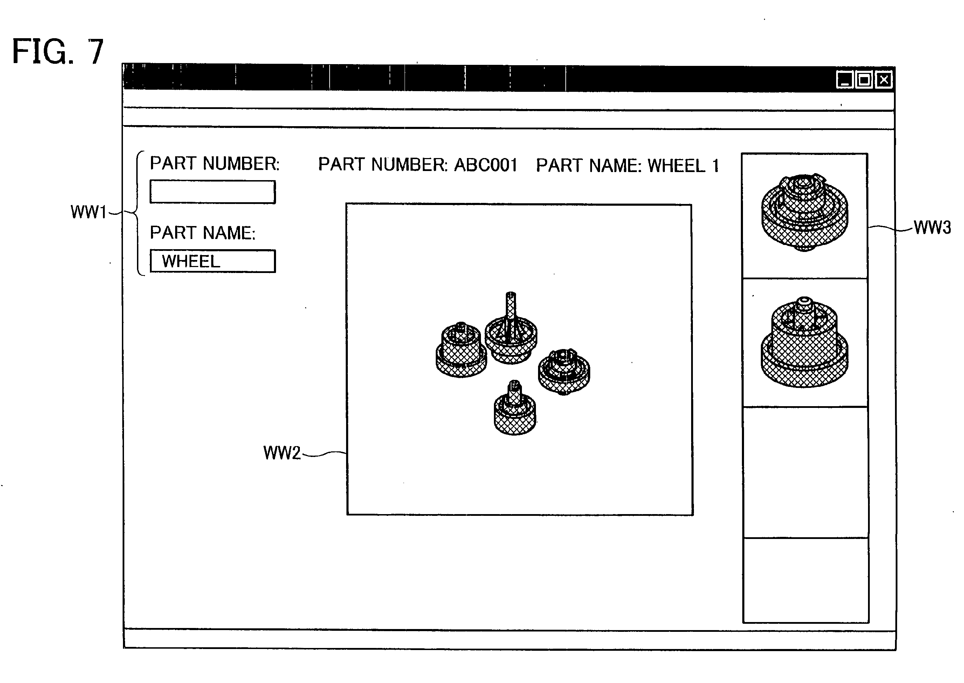

Referring to FIG. 7, an example display screen image of a second parts catalogue (also referred to as a parts catalogue) shown in the CRT screen display device 11 is illustrated.

The example display screen image of FIG. 7 includes display regions WW1, WW2 and WW3. The display region WW1 is used to search at least one of the parts. The display region WW2 displays an image, for example, an assembly of the part. The display region WW3 displays a single image of the parts.

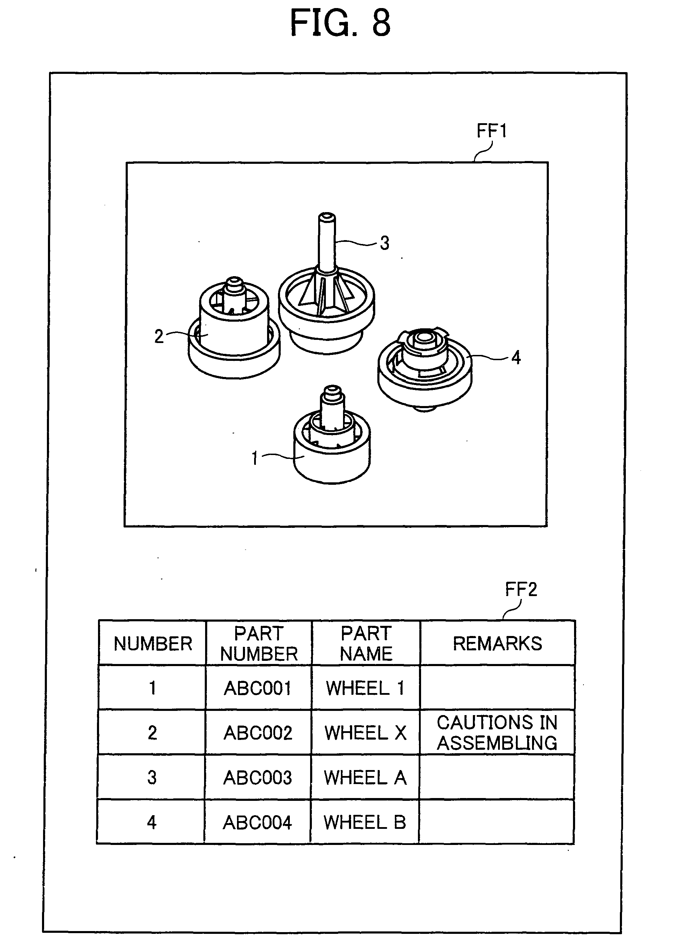

Referring to FIG. 8, an example of a first parts catalogue is illustrated.

The first parts catalogue includes an exploded view FF1 and a part table FF2. In the exploded view FF1, for example, a plurality of parts are illustrated, and each part has a number which is connected with the part by a lead line. In the part table FF2, for example, the numbers, part numbers, part names and remarks of the parts are tabulated. The first parts catalogue is generally in the form of an electronic medium. However, when the first parts catalogue is in the form of a sheet medium (e.g., a sheet of paper), it can be scanned to form the electronic medium, for example. Thereby, the first parts catalogue in the form of the electronic medium can be processed in the exemplary embodiment.

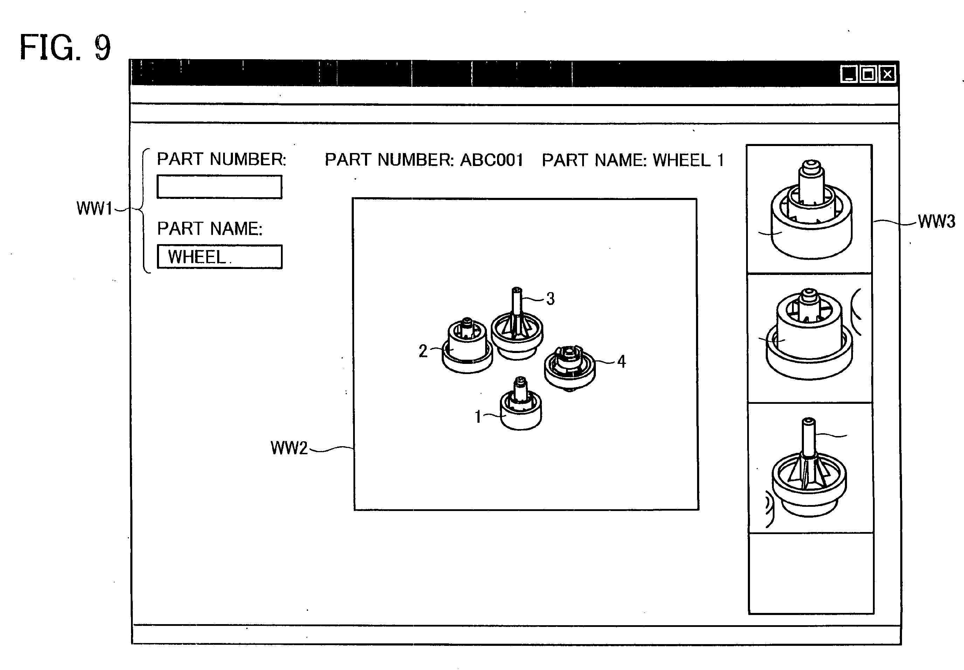

According to the exemplary embodiment, the first parts catalogue is used to produce the second parts catalogue. For example, when the first parts catalogue of FIG. 8 is converted to the second parts catalogue and is displayed as the display screen image similar to FIG. 7, contents of the second parts catalogue can be displayed as shown in FIG. 9.

Another example display screen image of the second parts catalogue is illustrated in FIG. 9 that is similar to FIG. 7 except for the display regions WW2 and WW3. The display region WW2 of FIG. 9 illustrates contents of the exploded view FF1 of FIG. 8, and the display region WW3 illustrates the single images of the parts in the exploded view FF1.

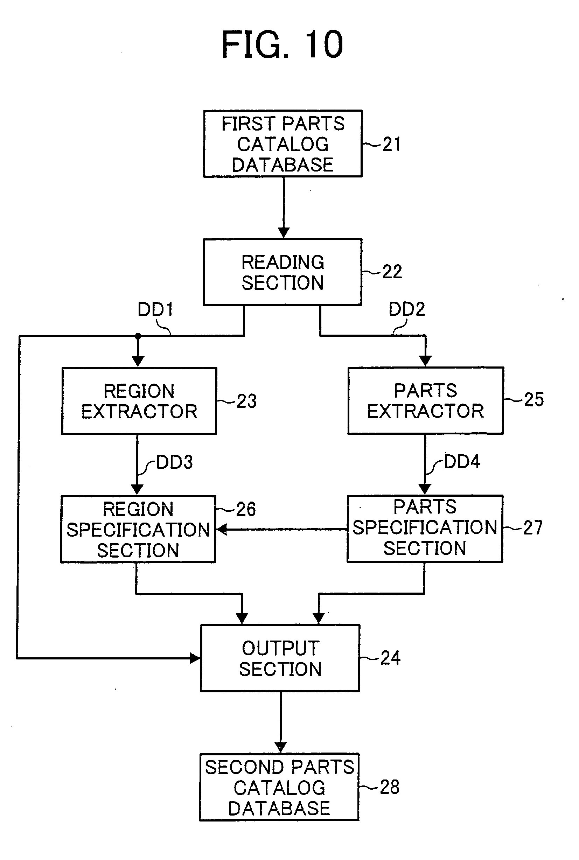

Referring to FIG. 10, a block diagram illustrates an example processing system for converting the first parts catalogue into the second parts catalogue.

The block diagram of FIG. 10 includes a first parts catalogue database 21, a reading section 22, a region extraction section 23, a parts extraction section 25, a region specification section 26, a parts specification section 27, an output section 24, and a second parts catalogue database 28.

The first parts catalogue database 21 is a database for the first parts catalogue having the exploded view FF1 and the parts table FF2.

The reading section 22 reads the first parts catalogue database 21 to extract exploded view data DD1 for the exploded view FF1 and parts table data DD2 for the parts table FF2. The reading section 22 outputs the exploded view data DD1 to the region extraction section 23 and the output section 24 while outputting the parts table data DD2 to the parts extraction section 25. When the first parts catalogue is in the form of the electronic medium, the reading section 22 extracts the exploded view data DD1 as image data and the parts table data DD2 as text data in a tabular form. By contrast, when the first data is in the form of the image data, for example, generated by scanning the sheet medium, an optical character recognition (OCR) can be used to extract the image data in the exploded view FF1 as the exploded data DD1 and the image data in the parts table FF2 as the parts table data DD2.

The region extraction section 23 extracts region information DD3, a display region of each part as a rectangular region, from the exploded view data DD1 so as to output the extracted region information DD3 to the region specification section 26. The region extraction section 23, for example, extracts a display location of the number connected to one of the parts by the lead line as the region information DD3. The region extraction section 23 can extract the rectangular region including the part and the number as the region information DD3.

The region specification section 26 specifies the region information DD3 of the part when the user uses the keyboard 13 and the screen indication device 14 to directly specify the rectangular region in the exploded view. The region specification section 26 can modify the region information DD3 when the user uses the keyboard 13 and the screen indication device 14 to modify the rectangular region in the exploded view.

The part extraction section 25 extracts part information DD4 (e.g., the number, the part number, the part name and the remarks) as a text from the parts table data DD2, and outputs the extracted part information DD4 to the parts specification section 27. The part information DD4 corresponds to respective row of the parts table FF2. When the parts table data DD2 is in the form of text data in the tabular form, the part information DD4 is simply extracted. By contrast, when the parts data DD2 is the image data, the OCR, for example, is used to extract the part information DD4.

The parts specification section 27 specifies a certain part of the part information DD4 to correspond to the region information DD3 when the user uses the keyboard 13 and the screen indication device 14 to specify the certain part.

The parts specification section 27 can modify the part information DD4 when the user uses the keyboard 13 and the screen indication device 14 for modification. In this way, the parts catalogue can be updated, when a part design is changed, for example.

The output section 24 generates a file group of a second parts catalogue format from the exploded view data DD1 and the region information DD3 corresponded to the part information DD4. For example, the output section 24 generates a catalogue description file from the part information DD4, and outputs the single image of respective part from the exploded view data DD1 and the region information DD3 as a clip image file. The exploded view data DD1 can be used as the image data of the product as a whole. When the exploded view data DD1 is in a vector format, a vector in the region information DD3 is extracted as the image file of respective part so that the single image can be generated as a file of the vector format.

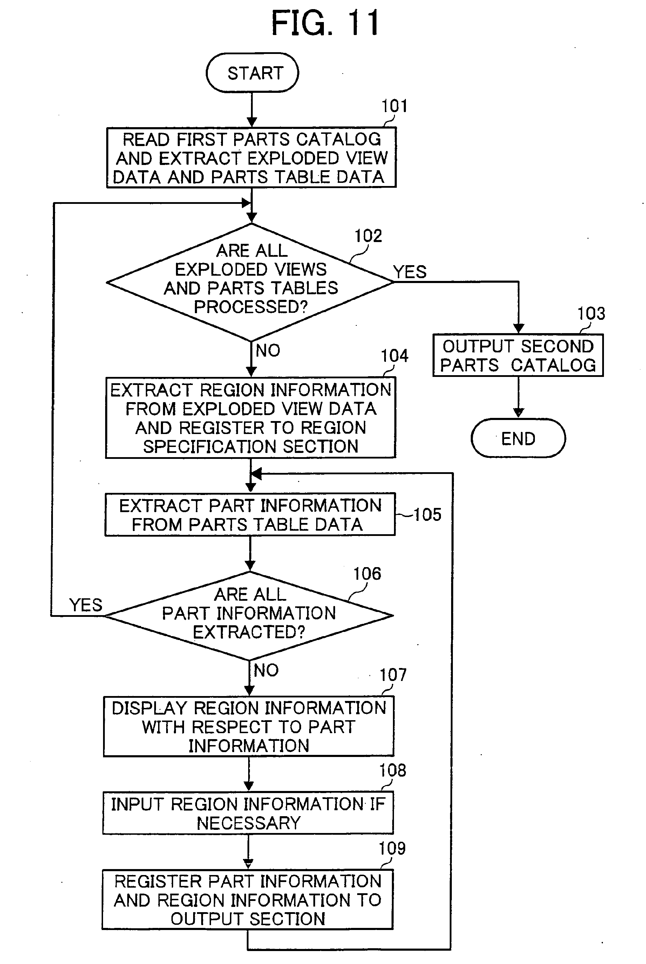

Referring to the flowchart of FIG. 11, an example procedure for preparing data of the second parts catalogue database 28 based on the first parts catalogue database 21 is explained.

In step 101, the reading section 22 reads the first parts catalogue database 21. The reading section 22 extracts bitmapped image data corresponding to respective portion of the exploded view FF1 as the exploded view data DD1 and the text data in the tabular form corresponding to respective parts table FF2 as the parts table data DD2. The reading section 22 provides the exploded view data DD1 and the parts table data DD2 to the region extraction section 23 and the part extraction section 25, respectively. The reading section 22 also provides the exploded view data DD1 to the output section 24 in which the exploded view data DD1 is registered so as to be output during catalogue output, and flow proceeds to step 102. In step 102, the reading section 22 determines whether or not all exploded view FF1 and parts table FF2 are processed. When all exploded view FF1 and parts table FF2 are processed (Yes in Step 102), the processed data is output to the second parts catalogue database 28 (Step 103). When all exploded view FF1 and parts table FF2 are not processed (No in Step 102), flow proceeds to step 104.

In step 104, the region extraction section 23 extracts a numerically expression region by image process of the exploded view data DD1. The OCR can be used to extract a numerically expression position that is the number connected with each of the parts by a tip of the lead line. The region extraction section 23 extracts a first line segment intercepting the extracted region to determine the lead line, and calculates a second line segment intercepting the tip of the determined lead line. Since the second line segment can be a portion of the part, the region extraction section 23 determines all line segments intercepting the first and the second line segments. Thereby, the region extraction section 23 provides a minimum rectangular region as the region information DD3 including all line segments to the region specification section 26. The region extraction section 23 can provide the numerically expression region that is first extracted as the region information DD3 to the region specification section 26. The region extraction section 23 calculates the region information DD3 of every part and registers to the region specification section 26. When the exploded view data DD1 is the vector format, the region information DD3 can be calculated by processing the line segment.

The parts catalogues in general have a characteristic of having a wide lead line and a wide boundary line (e.g., a shadow line) of a part. By using this characteristic, the region extraction section 23 can increase a process speed and efficiency thereof.

The part extraction section 25 extracts the part information DD4 in the text form from the parts table data DD2 for every row of the parts table FF2, and provides the extracted part information DD4 to the part specification section 27 (Step 105). The part extraction section 25 determines whether or not all parts information DD4 of the parts table data DD2 are extracted (Step 106). When the part extraction section 25 extracts all part information DD4, flow returns to step 102 (Yes in Step 106).

The parts specification section 27 displays the part information DD4 to the user so that the user knows the display region of the part in process. The parts specification section 27 provides the specified number of the parts table FF2 to the region specification section 26, and displays the region information DD3 corresponding to the specified number to the user.

In step 107, the region specification section 26 displays the region information DD3 corresponding to the specified number provided by the parts specification section 27 as the rectangular region in the exploded view FF1 with respect to the region information DD3 registered by the region extraction section 23. The rectangular region can be expressed by a rectangular frame border. The rectangular region can be translucent. When the user agrees to the displayed rectangular region, flow proceeds to step 108. The rectangular region can be modified when the user directly inputs another rectangular region in the exploded view FF1 by using a device such as a mouse and a keyboard (Step 108). When the user agrees to the modified rectangular region, it is determined as the region information DD3, and flow proceeds to step 109.

The determined region information DD3 and the part information DD4 in process are provided to the output section 24 to be registered (Step 109), and flow returns to step 105 for a next part process.

Therefore, all the exploded view FF1 and the parts table FF2 of the first parts catalogue database 21 are processed, and the exploded view data DD1, the part information DD4 and region information DD3 are registered. Consequently, the second parts catalogue database 28 is output based the first parts catalogue database 21, and flow ends.

In the above procedure, when the first parts catalogue to be read by the reading section 22 is in the form of a sheet, for example, a sheet of paper, the first parts catalogue can be read by the scanner and processed by the OCR in the reading section 22. Thereby, the first parts catalogue can be classified into an exploded view region and a table region. In such cases, the region extraction section 23 can extract the region information DD3 by the image process while the part extraction section 25 can extract the part information DD4 by the OCR.

In the above procedure, the region extraction section 23 is used. However, a catalogue preparer can input all regions through the region specification section 26 instead of the process executed by the region extraction section 23.

In the above procedure, the part information DD4 can be edited in the part specification section 25 by the catalogue preparer as necessary. Thereby, the first parts catalogue can be updated and revised when the first parts catalogue becomes obsolete due to the design change, for example.

In the above procedure, the number connected with each of the parts by the tip of the lead line in the exploded view FF1 is used. When the region extraction section 23 extracts the region of the number as the region information. DD3, it is not necessary to create the region as a single part diagram. Thereby, the single display image of respective part can not be output in the output section 24. In such case, a catalogue browsing tool can be used to search the part, and a search result can be displayed by highlighting the number connected with the part by the lead line tip and the number region. When the part is narrowed down by specifying the region with a position of the number connected with the part by lead line tip, the part cannot be included in the position of the number. Therefore, distances between the specified region and the region information DD3 for each of the parts are calculated and sorted so that the part having less than a certain distance can be displayed as a result of the region specification.

In the above procedure, the exploded view data DD1 can be the vector format. The vector information corresponding to respective part is extracted so that the catalogue browsing tool can search and display the part of the vector format in a different colour and a different thickness during the highlighting process.

Therefore, the second parts catalogue database 28 can be formed relatively automatically based on the first parts catalogue database 21. Thereby, the user can reduce workload.

This invention may be conveniently implemented using a conventional general purpose digital computer programmed according to the teachings of the present specification, as will be apparent to those skilled in the computer art. Appropriate software coding can readily be prepared by skilled programmers based on the teachings of the present disclosure, as will be apparent to those skilled in the software art. The present invention may also be implemented by the preparation of application specific integrated circuits or by interconnecting an appropriate network of conventional component circuits, as will be readily apparent to those skilled in the art.

Numerous additional modifications and variations are possible in light of the above teachings. It is therefore to be understood that within the scope of the appended claims, the disclosure of this patent specification may be practiced otherwise than as specifically described herein.

This patent application is based on Japanese patent application, No. 2006-168381 filed on June 19, 2006 in the Japan Patent Office.

## Claims

1. A method of preparing a parts catalogue by converting a first parts catalogue data (21) including an exploded view (DD1) of a product and a parts table (DD2) of parts in the exploded view into a second parts catalogue data (28) including part numbers and part names of the parts in the exploded view, the method comprising:
reading the first parts catalogue data (21);
extracting each of the exploded view and the parts table from the first parts catalogue data;
extracting part information (DD4) of each of the parts in the parts table; and
extracting region information (DD3) of each of the parts, the region information including at least one of information on a minimum region enclosing one of the parts in the exploded view and information on a position of a reference number connected with the one of the parts by a lead line.

2. A parts catalogue preparation device converting a first parts catalogue data (21) including an exploded view (DD1) of a product and a parts table (DD2) of parts in the exploded view into a second parts catalogue data (28) including part numbers and part names of the parts in the exploded view, the parts catalogue preparation device comprising:
a first extraction mechanism (22) configured to read the first parts catalogue data and extract each of the exploded view and the parts table from the first parts catalogue data;
a second extraction mechanism (25) to extract part information (DD4) of each of the parts in the extracted parts table; and
a third extraction mechanism (23) configured to extract region information (DD3) of each of the parts, the region information including at least one of information on a minimum region enclosing on of the parts in the exploded view and a position of a reference number connected to the one of the parts by a lead line.

3. A computer program comprising code means that, when executed by a computer system, instruct the computer system to carry out a method according to claim 1.

4. A computer readable medium storing the computer program product of claim 3.
